# EUROPEAN PATENT SPECIFICATION

(11) **EP 0 750 413 B1**
(45) Date of publication and mention of the grant of the patent: **10.04.2002**
(21) Application number: 96304559.6
(22) Date of filing: 19.06.1996
(51) Int. Cl.: H04M 3/56, H04M 3/42

(54) **Telephone conferencing system**
Fernsprechkonferenzsystem
Système de conférence téléphonique

(30) Priority: 21.06.1995 GB 9512672
(43) Date of publication of application: 27.12.1996
(73) Proprietor: INTELLPROP LIMITED, Guernsey, Channel Islands (GB)
(72) Inventor: Wilson, Jeffrey, Hampshire PO16 7OH (GB)
(74) Representative: Pilch, Adam John Michael

(56) References cited:
- EP-A- 0 095 178
- WO-A-92/17021
- US-A- 5 440 624
- US-A- 5 483 588
- PATENT ABSTRACTS OF JAPAN vol. 013, no. 081 (E-719), 23 February 1989 & JP 63 261948 A (SANYO ELECTRIC CO LTD), 28 October 1988,
- PATENT ABSTRACTS OF JAPAN vol. 095, no. 006, 31 July 1995 & JP 07 058860 A (NEC CORP), 3 March 1995,

## Description

This invention relates to telephone conferencing systems that enable a number of callers to participate in a conference by means of telephones.

Telephone or audio conferencing allows three or more people to participate in a single telephone conversation. Each person is able to hear all the other callers when they speak and the conversation can progress as if all the callers were in the same room.

Audio telephone conferencing systems exist for connection to both the analogue and digital telecommunications networks. These systems use either analogue bridges or digital signal processing to combine the audio from three or more callers and play it to all participants in the conference.

With the advance of digital systems, more complex algorithms have been employed to improve the quality of the speech heard by each caller. Some of these advances include automatic gain control (AGC), speaker detection and echo cancellation.

Conferencing systems have two basic market areas, business conferencing and social chatlines. Business conferencing can be provided as a public service by the network operator, or provided locally from a company's PABX. Chatlines are usually provided by independent service providers to callers who pay a premium rate for the call whilst accessing the service.

Existing conferencing systems usually provide an operator position to listen in on each conference. This allows for monitoring the content of conferences and also usually provides a means for the operator to censor callers either by muting them or even disconnecting them from the system. Most countries which allow conferencing services require them to be monitored to maintain an acceptable quality. The effect of this is that the use of such conferencing services tends to be expensive, since an operator needs to be provided for each conference call in order to provide effective monitoring.

Patent Abstracts of Japan, vol. 13, no 81 (E719) relating to JP-A-63 261 948 discloses a conference voice storage system in which it is possible to retrieve the stored voice of a specified speaker only, for subsequent reproduction, by co-ordinating caller identification information with the stored voice.

According to the invention there is provided a telephone conferencing system comprising:
means for connecting a number of incoming telephone calls together to provide a conferencing function; and
means for recording the telephone calls making up the conference in such a way that a participant to the conference can be subsequently associated with the corresponding identification function;
characterised in that:
the call connecting means is operable to allow connection of a telephone call to the conference only upon receipt of an acceptable identification function; and
means is provided for blocking an attempted call to the conference, based on the identification function of a particular caller, following review of the recorded telephone calls.

A preferred embodiment of the invention, to be described in more detail below, provides a means of automatically monitoring an audio conference and providing a means of determining who was speaking at any particular time during the conference. This means that a service provider can run a conference service without operator monitoring but still be able to determine which caller was speaking if there is a dispute over content or mis-use of the service.

By using a 'black list' associated with the system, callers shown to have mis-used the service can be barred from future participation. This requires, in one implementation, all callers to the service to call from telephones that provide calling line identity (CLI). When each new caller attempts to join the conference, the caller's CLI is checked by the conferencing equipment against the black list, and if the CLI is on the black list, the call is not allowed to proceed further. Callers from phones without CLI are not allowed access to the service. A variant of the service allows these callers to log on to the service in another way, such as by entering a caller identification and personal identification number (PIN) using DTMF tones or speaker independent recognition (SIR).

The service provider can provide either a closed user group (CUG) or public access service. The service provider will depend on complaints from other callers to the service in determining whether to bar a particular caller. Having received a complaint, the service provider must prove that an offence has been committed and, if so, identify the CLI (or other identification function) of the caller causing the problem.

The invention will now be described by way of example with reference to the accompanying drawings, throughout which like parts are referred to by like references, and in which:
Figure 1 is a block diagram of a telephone conferencing system according to one embodiment of the invention; and
Figure 2 is a block diagram of a telephone conferencing system according to another embodiment of the invention.

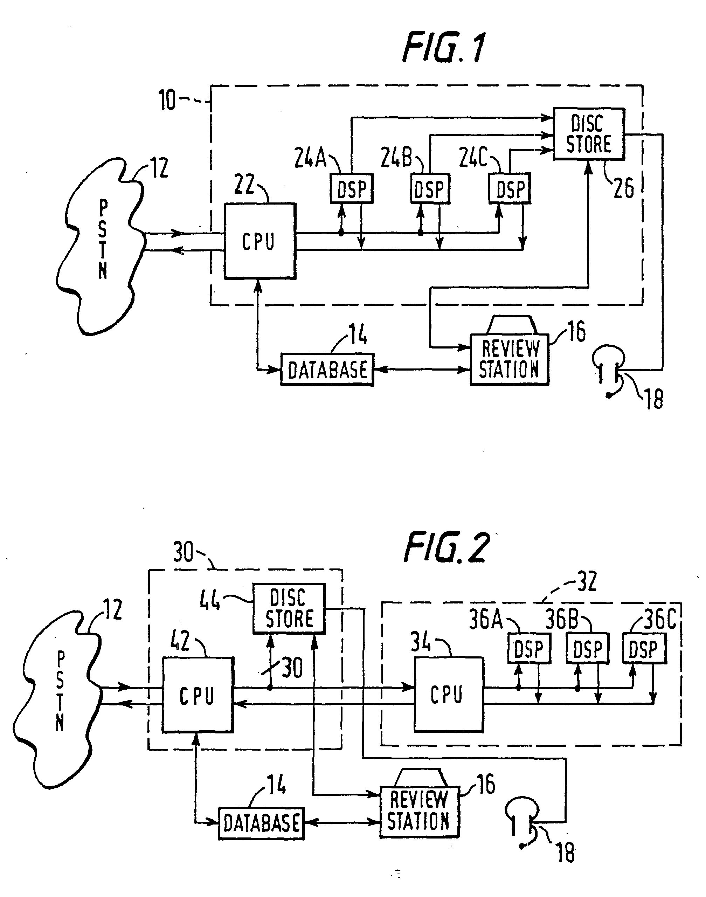

Referring to Figure 1, a telephone conferencing system comprises a voice services equipment (VSE) 10 having incoming and outgoing lines connected to a public switched telephone network (PSTN) 12. The VSE 10 is also connected to an external database 14 and to a review station 16 which is associated with a telephone headset 18. The VSE 10 may, for example, be a Telsis Hi-Call, some aspects of which are described in International Patent Application Publication No. WO 92/22165. The VSE 10 includes a central processing unit (CPU) 22 connected to the incoming/outgoing lines and to the database 14, and also connected to three digital signal processors (DSPs) 24A, 24B, 24C. A disc store 26 is provided for digital voice storage, the store 26 being connected to the DSPs 24A, 24B, 24C, also to the review station 16 and to the telephone headset 18.

The lines between the PSTN 12 and the VSE 10 are associated with specific port numbers, such that if there are thirty lines for each DSP, the ports may be numbered 1 to 30. As will be explained below, this helps in identification of participants to each conference. Each DSP is associated with a specific conference so that, as shown in Figure 1, the system can handle up to three conferences simultaneously. The disc store 26 records each conference separately, together with additional information as described below.

One form of the telephone conferencing system shown in Figure 1 can support up to thirty caller lines and up to three separate conferences. Each conference can have up to thirty participants. Each conference is recorded to disc continuously. A recording is made of each conference for each day, so every day three 24-hour recordings are made. Therefore a system with a total storage of 300 hours can store recordings of the three conferences for the last three days as well as recording the current day's conferences. Systems with larger audio storage can maintain records for a longer duration.

As each caller arrives in a conference, his CLI, the conference number (1 of 3), the port number (1 to 30) and the time and date are transmitted to the external database 14 for storage. As each conference progresses, the current speaker is determined using a digital signal processing algorithm. The port number of the current caller is held with the audio recording on disc. For each period of 125 ms, the current speaker is identified and the number stored alongside the audio on disc for that conference. This storage can take a number of different formats depending on the speech coding technique used to compress the conferencing audio. If more than one speaker is talking at any one time, each of the corresponding port numbers is recorded.

The service provider now has all the data required to listen to any conference at any time over the last four days, including the current day, and identify the CLI of the caller speaking at any time. In order to allow this, the equipment provides an interface for the service provider to define what date and time he wishes to listen to using the headset 18, and a means of reviewing this section including skipping forward and backward through the recording by appropriate controls provided at the review station 16. Having identified the exact time of any mis-use of the service, the service provider can cross reference the time and caller port number with the database 14 to obtain the caller's CLI. Having done this, the caller's CLI can be added to the 'black list' held on the database 14, if appropriate. Further attempts to participate in conferences from the line having that CLI will be blocked by the CPU 22 which checks allowable access against the 'black list' in the database 14 each time that a caller attempts to join a conference.

As an alternative to the use of CLI (or in addition thereto), callers may need to enter a specific caller identification (ID) and/or personal identification number (PIN) using DTMF tones or SIR (speaker independent recognition).

Figure 2 shows an alternative type of telephone conferencing system, which comprises a VSE 30 providing a monitoring function, and conferencing equipment 32 including a CPU 34 and three (or more) DSPs 36A, 36B, 36C. The VSE 30 includes a CPU 42, for connection to the PSTN 12, and a disc store 44 which has the facility to record each incoming line separately, as opposed to the system of Figure 1 discussed above. The VSE 30 is connected to a database 14, a review station 16 and a telephone headset 18, in a similar manner to the system of Figure 1.

The system of Figure 2 operates broadly in a similar way to that of Figure 1, except that there is provision for independent recording of each line into the system. This means there is no ambiguity as to who exactly was speaking at the time of a complaint because the recordings are kept for single callers, not the conference as a whole as in Figure 1. This implementation will usually require more storage capacity than the first type since up to thirty recordings can be in progress simultaneously.

As shown in Figure 2, all thirty lines pass through the VSE monitoring equipment 30 and are effectively tapped off to disc. This equipment also has the database 14 holding the 'black list' so as to provide the call filtering functionality. The database 14 also records call arrivals and conference details.

The service provider will still interrogate the equipment when a complaint is made so as to determine the parties involved in the conference. The recording for each party can either be listened to independently or as part of a conference regenerated from the stored recordings in the disc store 44, using the review station 16 and the headset 18. The conferencing system will be used to regenerate the conference. Once identified, the caller can be barred from the service as described previously.

The system of Figure 2 has advantages over that of Figure 1 in that the caller can be identified absolutely since individual recordings are made for each caller. The system of Figure 1 records conferences in such a way that there could be multiple callers speaking at the same time on the recording at the time in question. If this is the case, further identification may be required involving the service provider actually identifying the voice from previous parts of the recording.

Secondly, there is no limit on the number of conferences in the system of Figure 2 whereas that of Figure 1 has a limit of three simultaneous conferences to allow for management of the audio space. On the other hand, the system of Figure 2 requires additional equipment and therefore involves increased cost compared to the system of Figure 1.

## Claims

1. A telephone conferencing system comprising:
means (22) for connecting a number of incoming telephone calls together to provide a conferencing function; and
means (26) for recording the telephone calls making up the conference in such a way that a participant to the conference can be subsequently associated with the corresponding identification function;
**characterised in that**:
the call connecting means (22) is operable to allow connection of a telephone call to the conference only upon receipt of an acceptable identification function; and
means (22) is provided for blocking an attempted call to the conference, based on the identification function of a particular caller, following review of the recorded telephone calls.

2. A system according to claim 1, wherein the identification function is provided automatically by calling line identity when the call is initiated.

3. A system according to claim 1, wherein the identification function is input by a caller in the form of a caller identification number and/or PIN.

4. A system according to claim 3, wherein the identification function is input by DTMF tones or by speaker independent recognition.

5. A system according to any one of claims 1 to 4, wherein the recording means (26) is operable to record the conference together with periodic identification of the caller speaking at any time such that, upon review of the recorded conference, a caller may be identified.

6. A system according to any one of claims 1 to 4, wherein the recording means (44) is operable to record each telephone call separately with the corresponding identification function so that each caller may be identified upon review of the recorded conference.

7. A system according to any one of the preceding claims, wherein the call connecting means (22) and the call recording means (26) comprise part of a voice services equipment (10).

8. A system according to any one of the preceding claims, including a database (14) holding a list of unacceptable identification functions, the call blocking means (22) being responsive to the database (14) to block any call from a caller on the list.

9. A system according to any one of the preceding claims, wherein the system can handle a plurality of simultaneous conferences.

## Patentansprüche

1. Telefonkonferenzsystem mit:
Einrichtungen (22), um eine Anzahl eingehender Telefonrufe miteinander zu verbinden, um eine Konferenzfunktion bereitzustellen, und
Einrichtungen (26), um die Telefonanrufe aufzuzeichnen, wobei die Konferenz in der Art und Weise hergestellt wird, daß einem Teilnehmer der Konferenz nachträglich eine entsprechenden Identifikationsfunktion zugeordnet werden kann,
**dadurch gekennzeichnet,**
**daß** Einrichtungen (22) vorgesehen sind, um einen Anrufsversuch an die Konferenz abzublocken auf Basis der Identifikationsfunktion eines bestimmten Anrufers im Anschluß an die Durchsicht der aufgezeichneten Telefonanrufe.

2. System nach Anspruch 1, wobei die Identifikationsfunktion automatisch durch die Identität der Anruferleitung bereitgestellt wird, wenn der Anruf ausgelöst wird.

3. System nach Anspruch 1, wobei die Identifikationsfunktion durch einen Anrufer in Form einer Anruferidentifikationsnummer und/oder einer PIN eingegeben wird.

4. System nach Anspruch 3, wobei die Identifikationsfunktion durch DTMF-Frequenzen oder durch eine sprecherunabhängige Erkennung eingegeben wird.

5. System nach einem der Ansprüche 1 bis 4, wobei die Aufzeichnungseinrichtung (26) so betreibbar ist, daß sie die Konferenz gemeinsam mit einer periodischen Identifikation des zu einem beliebigen Zeitpunkt sprechenden Anrufers aufzeichnet, so daß bei dem nachträglichen Abruf der aufgezeichneten Konferenz ein Anrufer identifiziert werden kann.

6. System nach einem der Ansprüche 1 bis 4, wobei die Aufzeichnungseinrichtung (44) so betreibbar ist, daß sie jeden Telefonanruf getrennt mit der entsprechenden Identifikationsfunktion aufzeichnet, so daß jeder Anrufer beim Abhören bzw. beim Aufrufen der aufgezeichneten Konferenz identifiziert werden kann.

7. System nach einem der vorstehenden Ansprüche, wobei die Anrufverbindungseinrichtung (22) und die Anrufaufzeichnungseinrichtung (26) einen Teil einer Sprachdienstausrüstung (20) aufweisen.

8. System nach einem der vorstehenden Ansprüche, einschließlich einer Datenbank (14), die eine Liste von nicht annehmbaren Identifikationsfunktionen enthält, wobei die Anrufblockiervorrichtung (22) auf die Datenbank (14) reagiert, um jeglichen Anruf von einem Anrufer auf der Liste zu blockieren.

9. System nach einem der vorstehenden Ansprüche, wobei das System eine Mehrzahl simultaner Konferenzen handhaben kann.

## Revendications

1. Système de conférence téléphonique comprenant :
un moyen (22) de connexion destiné à connecter ensemble un certain nombre d'appels téléphoniques entrants pour réaliser une fonction de conférence ; et
un moyen (26) d'enregistrement destiné à enregistrer les appels téléphoniques constituant la conférence de façon telle qu'un participant à la conférence puisse être associé ultérieurement à la fonction d'identification correspondante ;
**caractérisé en ce que** :
le moyen (22) de connexion d'appel est utilisable pour permettre une connexion d'un appel téléphonique à une conférence seulement à la réception d'une fonction d'identification acceptable ; et
il est prévu un moyen (22) d'interdiction destiné à interdire une tentative d'appel à la conférence, en se basant sur la fonction d'identification d'un appelant particulier, à la suite du passage en revue des appels téléphoniques enregistrés.

2. Système selon la revendication 1, dans lequel la fonction d'identification est réalisée automatiquement par l'identité de ligne appelante lorsque l'appel est lancé.

3. Système selon la revendication 1, dans lequel la fonction d'identification est entrée par un appelant sous la forme d'un numéro et/ou d'un PIN (pour « Personnal Identification Number » - numéro d'identification personnel) d'identification d'appelant.

4. Système selon la revendication 3, dans lequel la fonction d'identification est entrée par des tonalités de DTMF (pour "Dual-Tone Multifrequency" - multifréquence en code 2) ou par reconnaissance indépendante du locuteur.

5. Système selon l'une quelconque des revendications 1 à 4, dans lequel le moyen (26) d'enregistrement est utilisable pour enregistrer la conférence conjointement avec l'identification périodique de l'appelant parlant à tout moment de sorte que, lors du passage en revue de la conférence enregistrée, on puisse identifier un appelant.

6. Système selon l'une quelconque des revendications 1 à 4, dans lequel le moyen (44) d'enregistrement est utilisable pour enregistrer chaque appel téléphonique séparément avec la fonction d'identification correspondante de sorte que chaque appelant puisse être identifié lors du passage en revue de la conférence enregistrée.

7. Système selon l'une quelconque des revendications précédentes, dans lequel le moyen (22) de connexion d'appel et le moyen (26) d'enregistrement d'appel comprennent une partie d'un équipement (10) de services vocaux.

8. Système selon l'une quelconque des revendications précédentes, incluant une base de données (14) contenant une liste de fonctions d'identification inacceptables, le moyen (22) d'interdiction d'appel réagissant à la base de données (14) pour interdire tout appel provenant d'un appelant de la liste.

9. Système selon l'une quelconque des revendications précédentes, dans lequel le système peut traiter plusieurs conférences en même temps.
